# EUROPEAN PATENT SPECIFICATION

(11) **EP 0 530 280 B1**
(45) Date of publication and mention of the grant of the patent: **15.07.1998**
(21) Application number: 91910110.5
(22) Date of filing: 23.05.1991
(51) Int. Cl.: C09D 11/00

(54) **TRANSPARENT HOT MELT JET INK**
DURCHSICHTIGE HEISSSCHMELZTINTE FÜR DEN TINTENSTRAHLDRUCK
ENCRE A JET THERMOFUSIBLE ET TRANSPARENTE

(30) Priority: 23.05.1990 US 528104
(43) Date of publication of application: 10.03.1993
(73) Proprietor: COATES ELECTROGRAPHICS LIMITED, Midsomer Norton, Bath BA3 8BH (GB); BROWN, Edward Alan, Bromley, Kent BR2 8BH (GB); COCKETT, Michael Anthony, Lenham, Kent ME17 2QB (GB); HAXELL, John Patrick, Nr. Holcombe, Bath BA3 5QD (GB)
(72) Inventor: Brown, Edward Alan, Bromley, Kent BR2 8BH (GB); Cockett, Michael Anthony, Lenham, Kent ME17 2QB (GB); Haxell, John Patrick, Nr. Holcombe, Bath Bath BA3 5QD (GB)
(74) Representative: Lamb, John Baxter
(86) International application number: GB9100812
(87) International publication number: WO9118065

(56) References cited:
- EP-A- 0 176 228
- EP-A- 0 181 198
- FR-A- 2 491 002
- US-A- 4 835 208
- US-A- 4 873 134

## Description

This invention relates to hot melt inks and, more particularly, to a new and improved transparent hot melt ink for use in ink jet systems.

In order to make excellent color reproductions on paper or vivid overhead projection transparencies, it is necessary to use highly transparent colored inks. These are normally supplied in a four-color process set, i.e., cyan, magenta, yellow and black. Conventional color printing often utilizes oil-based inks which normally incorporate a polymeric, film-forming, highly transparent vehicle to carry colorant to the substrate to be printed. Those polymeric vehicles, however, tend not to be suitable for inks used in ink jet systems because they have very high melt viscosities.

Conversely, low melt viscosity, sharp melting wax-like materials such as stearic acid, stearone and laurone, behenic acid, tristearin, terephthal alcohol, hydrogenated castor oil, propylene glycol monohydroxystearate, n-stearyl 12 hydroxystearamide etc., while satisfying the melt viscosity requirements of ink jet systems, form highly crystalline opaque solids on cooling. Similarly, most waxes, such as polyethylene, carnauba, candelilla, microcrystalline, and oxidized or modified polythene waxes, also tend to crystallize on cooling. Because of their crystalline content, such inks, even when mixed with transparent constituents, are not completely transparent and, when jet printed, do not project vivid colors in overhead projection transparencies, for example.

Heretofore, hot melt ink formulations have been proposed which comprise blends of natural waxes (e.g., U.S. Patent No. 4,484,948), C₁₈-C₂₄ fatty acids or alcohols (European Published Applications No. 0 181 198 and 0 099 682) or esters, didodecyl sebacate (U.S. Patent No. 3,653,932), and other synthetic blends of C₂₀₋₂₄ acids and C₁₄₋₁₉ acids or alcohols and ketones (U.S. Patent No. 4,659,383). U.S. Patent No. 4,741,930 discloses a method for color printing by the superposition of semitransparent, solid, optically clear hot melt inks and suggests fatty acids, such as stearic acid and oleic acid, polyethylene, and blends or mixtures of such materials, as base materials for the vehicle.

U.S. Patent No. 4,684,956 discloses a thermoplastic ink composition comprising blends of synthetic microcrystalline wax and hydrocarbon resin having a viscosity of 3-20 cps at the operating temperature to achieve low viscosity coupled with good adhesion.

None of the prior art, however, provides a hot melt ink containing a nontransparent constituent which is substantially transparent while retaining all of the other properties required for ink jet printing.

Accordingly, it is an object of the present invention to provide transparent hot melt jet inks that overcome the above-mentioned disadvantages of the prior art.

Another object of the invention is to provide transparent hot melt jet inks which have a desired melt viscosity at jetting temperature and are capable of forming substantially optically clear films on cooling.

These and other objects of the present invention are attained by providing a hot melt jet ink having a viscosity of from 5 centipoise to 100 centipoise at a temperature range of from 100°C to 130°C, the ink comprising a colouring agent and a vehicle for the colouring agent, wherein the vehicle for the colouring agent comprises a thermoplastic component, a wax or wax-like viscosity modifier, and from 2% to 25% by weight a transparentising agent selected from one or more of polyethylene waxes having a molecular weight of from 400 to 1200, synthetic paraffin waxes and microcrystalline waxes.

The nontransparent material or materials included in the vehicle may be present in amounts of 50% or more.

The ink compositions of the present invention have the property of film-forming when melted, and they have a tendency to form glasses on cooling, yet have a melt viscosity in the range from 5 centipoise to 100 centipoise in the temperature range from 100°C to 130°C and preferably have a viscosity in the range from 10 to 35 centipoise and desirably 15 to 30 centipoise in the temperature range from 115°C to 125°C. In addition, the compositions of the present invention have a lower heat of fusion than the sum of the heats of fusion of their individual components. They also have substantially uniform density and index of refraction throughout the ink vehicle.

The objective of the present invention is to provide a low melt viscosity, transparent, glassy, polymeric hot melt ink vehicle which contains one or more nontransparent substances so that, upon cooling after application, the ink remains substantially transparent so as to project bright and vivid colors when used in an overhead projector, for example.

Most waxes and other materials used as vehicles for hot melt inks crystallize when cooled and the microcrystalline structure renders the ink partially or completely opaque. Such nontransparent ink vehicles include stearic acid, lauric acid, linear polyethylene, aliphatic amide waxes, behenic acid, stearone, aluminum stearate, carnauba wax, microcrystalline waxes, modified microcrystalline waxes, paraffin wax, polyethylene wax, candelilla wax, montan wax, hydrogenated castor oil, synthetic ester waxes, oxidized polyethylene waxes, Fischer-Tropsch Waxes, esparto waxes, dammar wax, oxazoline wax, bisamide waxes, amide waxes, oleamides, stearamides, lauramides, erucamide, glycoyl monostearate, glycerol tristearate, chlorinated waxes, cetyl alcohol, laurone, diphenyl phthalate, dicyclohexyl phthalate, camphor, triphenyl phosphate, n-ethyl toluene sulphonamide, and n-cyclohexyl-p toluene sulphonamide.

Many materials suitable for use as vehicles in oil-based printing inks are transparent. For example, the hydrocarbon polymer materials marketed as Escorez and Kristalex, the chlorinated polyolefin marketed as Chloro 70, and the Piccolastic, styrene allyl alcohol and ketone resins, phenolics, alkyds, rosin, rosin esters, polyesters, etc. are examples of transparent materials used in oil based printing inks.

Most of those materials, however, tend to have very high melt viscosities such as several hundred centipoise or more at ink jetting temperatures or are otherwise unsuitable for use in hot melt ink jet printing. Moreover, it would not necessarily be expected that a transparent material, when mixed with a nontransparent material, would provide a transparent mixture - yet whilst retaining the low melt viscosity nature of non-transparent components of the mixture.

In accordance with the invention, however, it has been found that when nontransparent hot melt ink vehicle materials are blended or mixed with selected compatible materials, the combination is transparent upon cooling to the solid state.

The reason for this has not been fully established, but the following are believed to be important factors: The components of the ink vehicle should be substantially compatible throughout the melt-and-freeze cycle; no component of the vehicle should tend to separate on aging; and any crystallization which does occur should be in the form of microcrystals.

Certain waxes or wax-like materials appear to inhibit and interfere with crystal formation in such blends not only by minimizing the size of any crystals, but also by controlling the amount of amorphous intercrystalline materials. An optically clear amorphous material normally has a uniform refractive index and uniform density throughout its bulk. Moreover, an optically clear amorphous polymeric material tends to have a lower heat of fusion than a crystalline or opaque polymeric material of the same general type. Consequently, measurement of the heat of fusion of a polymer can provide an indication of the level of crystallinity in the polymer. E.g., see Blain, R.L., "Application Brief on Thermal Analysis of Polymer Crystallinity TA 12", DuPont Company, Analytical Instruments Division, Wilmington, Delaware. It is believed that by blending certain waxes and wax-like materials, stable solid solutions of the blends can be formed. Alternatively, the amorphous phases of the additives may act as solvents for the crystalline fractions of the base formulation.

More particularly, the present invention provides a transparent hot melt jet ink that cools to form a substantially optically transparent film by mixing or blending one or more thermoplastics with one or more non-transparent waxes or wax-like viscosity modifying materials such as stearone, laurone, microcrystalline waxes, polyethylene waxes, oxidized polyethylene waxes, polypropylene wax, behenic acid, aliphatic amide wax, etc., plus a second wax or wax-like compound such as polyethylene or linear polyethylene wax having a molecular weight of from 400 to 1200, microcrystalline wax, synthetic paraffin wax or mixtures thereof. The hot melt jet ink also includes colorants such as dyes, pigments or mixtures of them plus other additives where necessary.

### Examples 1-4

Hot melt ink samples containing stearone, oxidized microcrystalline wax and hydrocarbon polymers were prepared without any transparentizer and with varying amounts of polyethylene waxes of molecular weight 500 and molecular weight 1000 and with synthetic paraffin wax, and the inks were evaluated for transparency after cooling, crystallinity and compatibility of components. Transparency was rated on a scale of 0 (completely transparent) to 10 (opaque). Crystallinity was rated on a scale of 0 (no crystals) to 10 (large crystals). The compositions in parts by weight and the results of the evaluation are given in Table I.

**TABLE I**

| **Example** | **Control** | **1** | **2** | **3** | **4** |
|---|---|---|---|---|---|
| Stearone | 39.0 | 390 | 390 | 39.0 | 390 |
| Modified microcrystalline wax | 5.0 | 5.0 | 5.0 | 5.0 | 5.0 |
| Hydrocarbon polymers | 48.5 | 48.5 | 48.5 | 48.5 | 48.5 |
| Polyethylene wax (MW500) | -- | 9.0 | -- | -- | -- |
| Polyethylene wax (MW1000) | -- | -- | -- | -- | 9.0 |
| Synthetic paraffin wax | -- | -- | 4.0 | 9 0 | -- |
| Transparency | 10.0 | 2 | 6 | 3 | 2 |
| Crystallinity | 10.0 | 2 | 3 | 3 | 2 |
| Compatibility of components | Yes | Yes | Yes | Yes | Yes |
| Melt Viscosity @ 120°C (cp) | 29 | 25 | 25 | 22 | 27 |

### Examples 5-9

A hot melt ink sample similar to that of the Control but with more microcrystalline wax and less hydrocarbon polymer and with about 11 percent polyethylene wax of molecular weight 1000 was prepared and evaluated. In this case, the added polyethylene was insufficient by itself to improve the transparency significantly. With an increased amount of that polyethylene wax and about 2 percent of polyethylene wax of molecular weight 850 or 9 percent of a linear alcohol of molecular weight 700, however, the ink was rendered substantially transparent. The ink compositions in parts by weight and the results of the evaluation are shown in Table II.

**TABLE II**

| Example | 5 | 6 | 7 | 8 | 9 |
|---|---|---|---|---|---|
| Stearone | 40.0 | 40.0 | 40.0 | 40.0 | 40.0 |
| Polyethylene wax (MW1000) | 10.0 | 12.0 | 12.0 | 12.0 | 12.0 |
| Modified micro-crystalline wax | 13.0 | 13.0 | 13.0 | 13.0 | 13.0 |
| Hydrocarbon polymers | 26.5 | 26.5 | 26.5 | 26.5 | 26.5 |
| Disperse dyestuff | 2.0 | 2.0 | 2.0 | 2.0 | 2.0 |
| Linear alcohol (MW700) | -- | -- | 9.0 | -- | -- |
| Linear alcohol (MW450) | -- | -- | -- | 9.0 | -- |
| Polyethylene wax (MW850) | -- | -- | -- | -- | 2.0 |
| Transparency | 8 | 2 | 3 | 7 | 1 |
| Melt Viscosity @120°C (cp) | 30 | 28 | 20 | 22 | 27 |

## Claims

1. A hot melt jet ink having a viscosity of from 5 centipoise to 100 centipoise at a temperature range of from 100°C to 130°C, the ink comprising a colouring agent and a vehicle for the colouring agent, wherein the vehicle for the colouring agent comprises a thermoplastic component, a wax or wax-like viscosity modifier, and from 2% to 25% by weight a transparentising agent selected from one or more of polyethylene waxes having a molecular weight of from 400 to 1200, synthetic paraffin waxes and microcrystalline waxes

2. A hot melt ink according to claim 1, in which the transparentising agent comprises a synthetic paraffin wax.

3. A hot melt ink according to claim 1, in which the transparentising agent comprises a polyethylene wax having a molecular weight of from 400 to 1200.

4. A hot melt ink according to claim 1, in which the transparentising agent comprises a microcrystalline wax.

5. A hot melt ink according to any one of the preceding claims, having a viscosity of from 10 to 35 centipoise at a temperature of from 115°C to 125°C.

6. A hot melt ink according to claim 5, having a viscosity of from 15 to 30 centipoise at a temperature of from 115°C to 125°C.

## Patentansprüche

1. Eine heiß schmelzende Tinte für den Tintendruck mit einer Viskosität von 5 Centipoise bis 100 Centipoise bei einem Temperaturbereich von 100°C bis 130°C, wobei die Tinte umfaßt ein Färbemittel und ein Bindemittel für das Färbemittel, wobei das Bindemittel für das Färbemittel eine thermoplastische Komponente, ein Wachs- oder wachsähnliches Viskositätsmodifikationsmittel und 2 Gew.% bis 25 Gew.% eines transparent machenden Mittels ausgewählt aus ein oder mehreren Polyethylenwachsen mit einem Molekulargewicht von 400 bis 1200, synthetischen Paraffinwachsen und mikrokristallinen Wachsen umfaßt.

2. Eine heiß schmelzende Tinte nach Anspruch 1, wobei das transparent machende Mittel ein synthetisches Paraffinwachs umfaßt.

3. Eine heiß schmelzende Tinte nach Anspruch 1, wobei das transparent machende Mittel ein Polyethylenwachs mit einem Molekulargewicht von 400 bis 1200 umfaßt.

4. Eine heiß schmelzende Tinte nach Anspruch 1, wobei das transparent machende Mittel ein mikrokristallines Wachs umfaßt.

5. Eine heiß schmelzende Tinte nach einem der vorhergehenden Ansprüche mit einer Viskosität von 10 bis 35 Centipoise bei einer Temperatur von 115°C bis 125°C.

6. Eine heiß schmelzende Tinte nach Anspruch 5 mit einer Viskosität von 15 bis 30 Centipoise bei einer Temperatur von 115°C bis 125°C.

## Revendications

1. Encre à jet thermofusible possédant une viscosité allant de 5 centipoises à 100 centipoises dans une plage de températures de 100°C à 130°C, l'encre comprenant un agent colorant et un véhicule pour l'agent colorant, où le véhicule pour l'agent colorant comprend un constituant thermoplastique, un modificateur de viscosité à base de cire ou analogue à de la cire, et 2% à 25% en poids d'un agent servant à rendre transparent choisi parmi une ou plusieurs des cires de polyéthylène ayant un poids moléculaire compris entre 400 et 1200, des cires de paraffine synthétique et des cires microcristallines.

2. Encre thermofusible selon la revendication 1, dans laquelle l'agent servant à rendre transparent comprend une cire de paraffine synthétique.

3. Encre thermofusible selon la revendication 1, dans laquelle l'agent servant à rendre transparent comprend une cire de polyéthylène ayant un poids moléculaire compris entre 400 et 1200.

4. Encre thermofusible selon la revendication 1, dans laquelle l'agent servant à rendre transparent comprend une cire microcristalline.

5. Encre thermofusible selon l'une quelconque des revendications précédentes, possédant une viscosité allant de 10 à 35 centipoises à une température comprise entre 115°C et 125°C.

6. Encre thermofusible selon la revendication 5, possédant une viscosité allant de 15 à 30 centipoises à une température comprise entre 115°C et 125°C.
